# FASCICULE DE BREVET EUROPEEN

(11) **EP 3 685 075 B1**
(45) Date de publication et mention de la délivrance du brevet: **07.07.2021**
(21) Numéro de dépôt: 18800692.8
(22) Date de dépôt: 20.09.2018
(51) Int. Cl.: F16H 61/00, F16H 61/4035

(54) **BLOC D'ALIMENTATION POUR AU MOINS UNE MACHINE HYDRAULIQUE**
VERSORGUNGSEINHEIT FÜR MINDESTENS EINE HYDRAULISCHE MASCHINE
SUPPLY UNIT FOR AT LEAST ONE HYDRAULIC MACHINE

(30) Priorité: 22.09.2017 FR 1758805
(43) Date de publication de la demande: 29.07.2020
(73) Titulaire: Poclain Hydraulics Industrie, 60410 Verberie (FR)
(72) Inventeur: DEL MASTRO, Alessio, 60410 Verberie (FR); KUBAN, Viktor, 60410 Verberie (FR); LUCIENNE, Philippe, 60410 Verberie (FR); DEPIERRE, Gery, 60410 Verberie (FR)
(74) Mandataire: Cabinet Beau de Loménie
(86) Numéro de dépôt international: PCT/FR2018/052294
(87) Numéro de publication internationale: WO 2019/058058

(56) Documents cités:
- WO-A1-2016/182436
- FR-A1- 2 956 462
- US-A1- 2017 114 893
- US-A1- 2017 174 195

## Description

Le présent exposé concerne un bloc d'alimentation pour au moins une machine hydraulique.

Classiquement, une machine hydraulique est alimentée à partir d'une pompe qui refoule du fluide sous pression vers une conduite d'alimentation de la machine, cette dernière présentant également une conduite d'échappement. Lorsque le montage est en circuit fermé, la conduite d'échappement est reliée à un orifice de la pompe tandis que, lorsque le circuit est de type ouvert, la conduite d'échappement est reliée à un réservoir sans surpression, c'est-à-dire à la pression atmosphérique.

En particulier, la machine hydraulique est une machine comprenant un bloc-cylindres, avec une pluralité de cylindres dans lesquels des pistons sont déplaçables en va-et-vient, ces pistons coopérant avec une came pour assurer une rotation relative entre le bloc-cylindres et la came. Les pistons peuvent être orientés radialement par rapport à l'axe de rotation de la machine, auquel cas la came peut être du type ondulé, ou bien être orientés axialement, auquel cas la came peut être du type plateau-came à inclinaison variable. La machine peut être du type à came tournante ou à bloc-cylindres tournant.

La pompe est elle-même entraînée à partir d'un système d'entrainement comprenant par exemple un moteur thermique d'entraînement de pompe. Pour gérer l'alimentation de la machine, le circuit comprend en outre en général un dispositif de valve, permettant par exemple d'inverser la haute et la basse pression pour inverser le sens de rotation de la machine, ou bien d'opérer des fonctions annexes, telles qu'une neutralisation de la machine en mettant les conduites d'alimentation et d'échappement à la même pression, ou bien un débrayage, en faisant régner dans l'espace intérieur du carter de la machine une pression de décrabotage contribuant à ramener les pistons de la machine à l'intérieur de leurs cylindres.

La machine hydraulique peut notamment être un moteur hydraulique d'assistance faisant partie d'une transmission hydraulique pouvant être mise en œuvre en complément ou à la place d'un moteur principal d'entrainement, en particulier pour le déplacement d'un véhicule. Des circuits hydrauliques comprenant de tels moteurs hydrauliques sont en particulier connus par les demandes de brevets suivantes : FR 2 956 462, FR 2 956 461, FR 2 958 886, FR 3 004 148, FR 3 012 543, FR 3 014 940, FR 3 026 683, FR 3 026 811, FR 3 026 810, ou encore FR 3 037 354.

Ces différentes demandes de brevet s'intéressent en particulier à certaines fonctionnalités des circuits de transmission qu'elles décrivent. Elles décrivent différents modes d'alimentation du ou des moteurs hydrauliques qui comprennent au moins une pompe principale entraînée par un moteur du type moteur thermique, et des conduites hydrauliques convoyant le fluide vers les différents orifices du ou des moteurs hydrauliques.

Ces technologiques sont bien maîtrisées, mais la mise en place des circuits hydrauliques peut s'avérer relativement complexe, en raison des branchements nécessaires. Il faut d'une part assurer l'entraînement de la pompe et, d'autre part, assurer la bonne connexion des conduites aux orifices du ou des moteurs hydrauliques. Les différents éléments ainsi nécessaires à l'alimentation sont présentés de manière séparée et doivent être montés séparément. Le montage peut s'avérer fastidieux, en particulier lorsque la machine hydraulique équipe un véhicule qui comporte par ailleurs de nombreux composants.

US2017/114893 divulgue un bloc d'alimentation selon le préambule de la revendication 1.

L'invention vise à proposer un bloc d'alimentation permettant une mise en place simplifiée et une connexion aisée aux différents composants concernés.

Ainsi, le présent exposé concerne un bloc d'alimentation pour au moins une machine hydraulique, selon la revendication 1.

Le bloc d'alimentation selon le présent exposé comprend donc d'une part un port de type mécanique constituant l'entrée de mouvement pour l'entraînement mécanique du dispositif de pompe. Ce port est en particulier une entrée de force et peut se présenter sous la forme d'une partie d'arbre d'entraînement pouvant être raccordée à la sortie d'un moteur d'entraînement, en particulier un moteur thermique ou électrique. Cette entrée de mouvement peut être de type mâle, pouvant être accouplée mécaniquement à une sortie femelle du moteur d'entraînement, mais il peut également s'agir d'une partie femelle pouvant être accouplée mécaniquement à une sortie mâle du moteur d'entraînement.

Le bloc d'alimentation comprend dans le même carter le dispositif de pompe et le dispositif de valve hydraulique. Outre le port mécanique d'entrée de mouvement précédemment cité, le carter présente des premier et deuxième ports hydrauliques qui sont en sortie du dispositif de valve hydraulique et peuvent être reliés aux orifices principaux d'une machine hydraulique. Grâce aux moyens de commande, les pressions aux premier et deuxième ports hydrauliques peuvent être mises soit à une pression commune de sorte qu'une machine hydraulique dont les ports principaux sont connectés aux premier et deuxième ports hydrauliques est à l'état neutralisé, soit à des pressions différentes permettant de faire fonctionner la machine avec des pressions d'alimentation et d'échappement différentes. Le bloc d'alimentation peut simplement être fixé à un support tel qu'une partie fixe d'un véhicule, en particulier le bloc-moteur, la boîte de vitesse ou une partie du châssis. Ce bloc peut être manipulé et monté comme un tout et il suffit, pour faire fonctionner la machine hydraulique, de raccorder le bloc d'alimentation mécaniquement par l'entrée de mouvement au moteur d'entraînement du dispositif de pompe, et de le raccorder fluidiquement à la machine par les premier et deuxième ports hydrauliques de puissance, tout en le connectant aux moyens de commande. Le bloc d'alimentation permet de réaliser les connexions mécaniques et hydrauliques de manière compacte. Dans la mesure où son carter contient le dispositif de valve hydraulique, l'utilisation de conduites et de raccords fluidiques externes à ce bloc est limitée, ce qui contribue à la compacité et à l'ergonomie générale, et limite les pertes de charges pouvant être dues à des connexions fluidiques externes.

Optionnellement, le carter présente en outre un troisième et un quatrième port hydraulique de puissance, les premier, deuxième, troisième et quatrième ports hydrauliques de puissance étant mis à la pression commune de repos dans l'état de repos, et les troisième et quatrième deux ports hydrauliques de puissance étant respectivement mis à la haute et à la basse pression du dispositif de pompe dans l'état activé.

Optionnellement, la haute pression et la basse pression du dispositif de pompe sont respectivement comprises entre 80 et 600 bar, et entre 10 et 30 bar.

Optionnellement, le carter présente un port hydraulique de retour à un réservoir de fluide et un port hydraulique de mise en pression et, dans l'état de repos, le port hydraulique de mise en pression est mis à une pression intermédiaire du dispositif de pompe supérieure à la pression au port hydraulique de retour, tandis que, dans l'état activé, le port hydraulique de mise en pression est mis à la pression du port hydraulique de retour.

Optionnellement, la pression intermédiaire est comprise entre 5 et 10 bar.

Optionnellement, le carter présente au moins un port de commande, pour sa liaison aux moyens de commande.

Les moyens de commande peuvent prendre la forme d'une unité de commande, en particulier de type unité électronique de commande (ECU). Cependant, ces moyens de commande peuvent être de tout type convenable, par exemple sous la forme d'un tableau de relais électriques.

Optionnellement, ledit au moins un port de commande comprend un port de connexion électrique et/ou un port de connexion hydraulique ou pneumatique. On peut d'ailleurs prévoir, deux commandes en parallèle, l'une de type électrique et l'autre de type hydraulique ou pneumatique.

Optionnellement, le carter présente un port de commande de cylindrée de pompe.

Optionnellement, le carter présente un port de source de fluide.

Optionnellement, le carter comprend deux parties fixées ensemble, à savoir une partie de pompe qui présente et contient le dispositif de pompe, et une partie de valve qui présente les ports hydrauliques de puissance, une interface entre le dispositif de pompe et le dispositif de valve hydraulique étant logée dans lesdites parties de pompe et de valve.

Optionnellement, le carter comprend trois parties fixées ensemble, à savoir une partie de pompe qui présente et contient le dispositif de pompe, une partie de valve qui présente les ports hydrauliques de puissance, et une partie d'interface entre le dispositif de pompe et le dispositif de valve hydraulique, ladite partie d'interface étant fixée entre la partie de pompe et la partie de valve.

Le présent exposé concerne également un ensemble de commande d'alimentation pour au moins une machine hydraulique, comprenant un bloc d'alimentation tel que précédemment défini, et des moyens de commande reliés à ce bloc.

Le présent exposé concerne encore un circuit de transmission hydraulique, comprenant au moins une machine hydraulique et un bloc d'alimentation pour ladite machine, tel que précédemment défini, dans lequel la machine hydraulique présente deux orifices principaux respectivement raccordés au premier et au deuxième port hydraulique de puissance du bloc d'alimentation.

Optionnellement, le circuit de transmission comprend au moins une autre machine hydraulique qui présente deux orifices principaux respectivement raccordés au troisième et au quatrième port hydraulique de puissance du bloc d'alimentation.

Optionnellement, la ou les machines hydrauliques sont des moteurs hydrauliques débrayables d'assistance hydraulique temporaire.

Optionnellement, le carter du bloc d'alimentation un port hydraulique de retour et un port hydraulique de mise en pression tels que définis précédemment, et le moteur hydraulique présente un orifice de crabotage/décrabotage raccordé au port hydraulique de mise en pression du bloc d'alimentation, le circuit comprenant un réservoir de fluide auquel est raccordé le port hydraulique de retour du bloc d'alimentation, éventuellement via un refroidisseur.

Le présent exposé sera bien compris à la lecture de la description détaillée qui suit, qui se réfère, à titre d'exemples de réalisation, aux dessins annexés sur lesquels :
- la figure 1 montre schématiquement un circuit de transmission comprenant un bloc d'alimentation selon le présent exposé raccordé à une machine hydraulique ;
- la figure 2 est une vue analogue à la figure 1 montrant une variante de réalisation ;
- la figure 3 est également une vue analogue à la figure 1, montrant une autre variante;
- la figure 4 montre une autre variante dans laquelle le bloc d'alimentation est raccordé à deux machines hydrauliques; et
- la figure 5 montre un sélecteur d'alimentation pouvant faire partie du dispositif de valve.

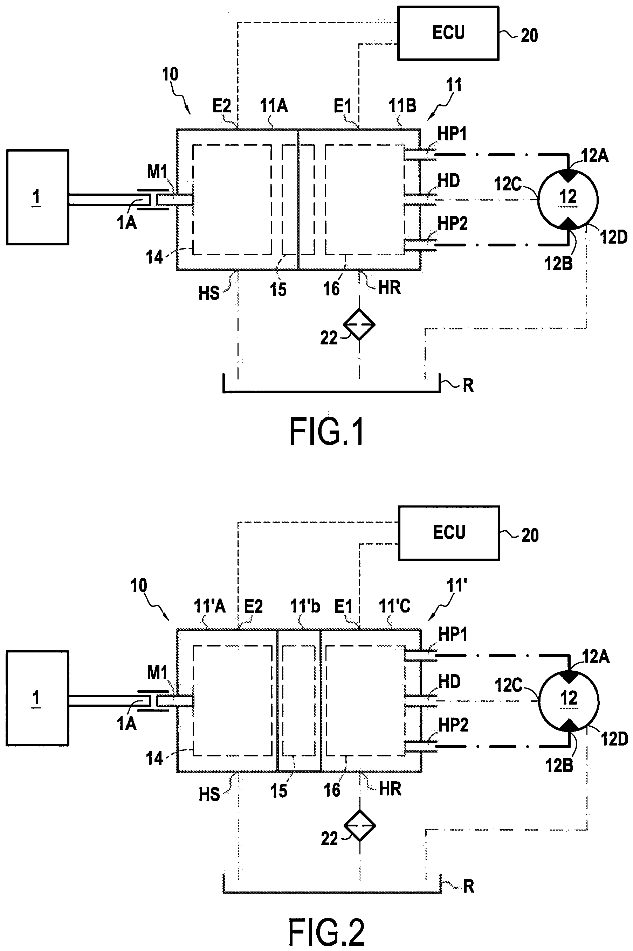

La figure 1 montre un bloc d'alimentation 10 qui sert à l'alimentation d'une machine hydraulique 12. En l'espèce, la machine hydraulique 12 est de type moteur hydraulique et présente deux orifices principaux, respectivement 12A et 12B qui servent à l'admission et à l'échappement du fluide nécessaire pour que le moteur produise un couple. Comme indiqué précédemment, il peut s'agir d'un moteur à came tournante ou à bloc-cylindres tournant, d'un moteur à pistons radiaux ou à piston axiaux, ou encore d'une autre machine hydraulique, en particulier une autre machine hydraulique de propulsion, par exemple de type gérotor. Le bloc d'alimentation 10 comprend un carter 11 qui contient, d'une part, un dispositif de pompe 14 et, d'autre part, un dispositif de valve hydraulique 16. Entre ces dispositifs de pompe et de valve se trouve une interface 15 qui établit la connexion hydraulique entre les orifices du dispositif de pompe et les ports du dispositif de valve.

Comme indiqué par exemple dans le document FR 2 956 462, le dispositif de pompe peut comprendre une pompe principale visant à alimenter la conduite principale d'alimentation de la machine hydraulique, et une pompe de gavage servant à maintenir une pression de gavage minimum dans les conduites hydrauliques. La pompe principale peut être du type réversible pour alimenter la machine hydraulique en circuit fermé. La pompe peut également être du type ayant un seul port de refoulement pour une alimentation en circuit ouvert. Par ailleurs, la pompe principale peut être de type à cylindrée réglable, par exemple par la modification de l'orientation d'un plateau-came, voire à cylindrée fixe, ainsi qu'il sera exposé dans la suite. Le carter 11 présente une entrée de mouvement M1 qui est une entrée de mise en mouvement mécanique du ou des rotors du dispositif de pompe. En particulier, cette entrée de mouvement M1 peut prendre la forme d'un arbre d'entraînement mécanique pouvant être accouplée avec la sortie 1A du moteur d'entraînement 1.

Le circuit de transmission comprenant un bloc d'alimentation selon le présent exposé peut être embarqué sur un véhicule, et la machine hydraulique peut être un moteur hydraulique d'assistance servant à l'entrainement d'assistance d'un tel véhicule, pour compléter l'entraînement principal du véhicule. Le moteur 1 peut être le moteur principal du véhicule faisant partie d'une transmission mécanique. Il s'agit par exemple d'un moteur thermique ou d'un moteur électrique. L'accouplement entre la sortie 1A du moteur et l'entrée de mouvement M1 peut être réalisé de toute manière connue.

Le carter 11 du bloc d'alimentation présente également un premier et un deuxième port hydraulique de puissance, respectivement HP1 et HP2, respectivement reliés via des conduites principales aux orifices principaux 12A et 12B de la machine hydraulique 12.

Le dispositif de valve hydraulique 16 sert à établir une liaison sélective entre le dispositif de pompe 14 et les ports hydrauliques de puissance HP1 et HP2.

Le circuit de transmission comprend encore une unité de commande 20, par exemple du type ECU (unité de commande électronique) servant en particulier à la commande du dispositif de valve hydraulique 16. On voit ainsi que le carter 11 présente un port de commande E1 reliant l'unité de commande 20 au dispositif de valve hydraulique 16.

En l'espèce, le carter 11 présente également un autre port de commande E2 qui relie l'unité de commande 20 au dispositif de pompe 14. Il s'agit en particulier d'un port de commande servant à la commande de cylindrée de pompe. Par exemple, le dispositif de pompe peut comprendre une pompe principale à cylindrée réglable par inclinaison de son plateau-came, la commande opérée par le port de commande E2 servant à commander un piston ou analogue pour modifier l'inclinaison du plateau came de la pompe principale.

Il peut être intéressant que la pompe principale du dispositif de pompe soit du type à cylindrée variable, en particulier pour permettre de régler les paramètres de débit et de pression de fluide aux orifices principaux de la pompe principale et du dispositif de pompe. Cependant, la pompe principale peut également être de type à cylindrée fixe. En particulier, selon le mode de commande du moteur 1 d'entraînement de cette pompe, les paramètres de débit et de pression du fluide aux orifices principaux de la pompe principale peuvent être réglés en fonction de la vitesse de la sortie 1A du moteur reliée à l'entrée de mouvement M1. Il est également possible de régler ces paramètres en fonction du réglage de l'accouplement entre la sortie 1A du moteur et l'entrée de mouvement M1, qui peut par exemple être réalisée via un embrayage dynamique.

Les ports de commande E1 et E2 peuvent être des ports filaires de connexion électrique, étant cependant entendu qu'il peut également s'agir de ports de commande non matérialisés physiquement, lorsque la communication entre l'unité de commande 20 et le dispositif de valve hydraulique 16 et/ou le dispositif de pompe 14 est réalisée de manière non filaire, par exemple par des signaux Bluetooth, Wifi ou analogue.

Indépendamment de l'éventuelle commande de la cylindrée du dispositif de pompe, l'unité de commande 20 sert à commander le dispositif de valve hydraulique 16 dans un état de repos dans lequel les premier et deuxième ports hydrauliques de puissance HP1 et HP2 sont mis à une pression commune de repos. Dans ce cas, les orifices principaux 12A et 12B de machine hydraulique 12 reliés aux ports hydrauliques de puissance sont mis à la même pression, de sorte que cette machine est inactivée.

Comme indiqué, le dispositif de la valve hydraulique 16 est relié au dispositif de pompe 14 via l'interface 15. Cette interface réalise par exemple une liaison entre des ports d'entrée du dispositif de valve 16 et des conduits de puissance internes au bloc d'alimentation, reliés aux orifices principaux du dispositif de pompe. Par exemple, dans la position de repos, les premier et deuxième ports hydrauliques de puissance HP1 et HP2 peuvent tout simplement être reliés entre eux en étant isolés du dispositif de pompe 14 et, en particulier, isolés des conduits de puissance interne précités. Ainsi, l'entraînement du dispositif de pompe 14 par le moteur 1 n'a pas d'effet d'entrainement sur la machine hydraulique 12.

Le dispositif de valve hydraulique 16 peut également être commandé par l'unité de commande 20 dans un état activé dans lequel les premier et deuxième ports hydrauliques de puissance HP1 et HP2 sont respectivement mis à une haute pression et à une basse pression du dispositif de pompe. Dans ce cas, lorsque la machine hydraulique est un moteur hydraulique, le port hydraulique de puissance relié à la haute pression sert à l'alimentation du moteur, tandis que le port hydraulique de puissance relié à la basse pression sert à l'échappement de fluide hydraulique.

Selon le type de machine hydraulique, la haute pression peut être de l'ordre de 80 à 600 bar, et la basse pression être de l'ordre de 10 à 30 bar. En particulier, lorsque la machine hydraulique est de type moteur hydraulique à pistons radiaux, la haute pression peut être de l'ordre de 200 à 600 bar, et la basse pression être de l'ordre de 10 à 30 bar.

Sur la figure 1, on voit que le carter 11 présente en outre un port hydraulique HR de retour à un réservoir de fluide R, en particulier un réservoir sans surpression. En l'occurrence, le port hydraulique de retour HR est raccordé au réservoir R via un refroidisseur 22. En effet, le fluide retournant au réservoir par le port HR peut en particulier provenir du dispositif de valve 16 et avoir été réchauffé du fait de son utilisation dans ce dispositif 16, par exemple lorsqu'il sert au pilotage hydraulique de composants hydrauliques du dispositif de valve 16. De manière générale, le fluide peut être réchauffé par son utilisation dans les divers composants et conduites de la transmission hydrostatique.

Le carter 11 présente encore un port hydraulique de mise en pression HD. Comme on le voit sur la figure 1, ce port hydraulique de mise en pression peut être relié à un orifice 12C de la machine hydraulique 12. Le port hydraulique de mise en pression peut, selon la commande du dispositif de valve 16, être mis à une pression intermédiaire du dispositif de pompe 14 supérieure à la pression du port hydraulique de retour HR. Cette commande est réalisée de manière à correspondre, en tout ou partie, à l'état de repos. En effet, dans cet état de repos, les orifices principaux 12A et 12B de la machine hydraulique 12 sont mis à la même pression. Ainsi, le ou les pistons de cette machine sont inactifs et ne provoquent pas de couple résistant. En particulier, le port hydraulique de mise en pression sert, via l'orifice 12C de la machine, à faire régner dans l'espace interne du carter de cette machine une pression de débrayage tendant à coopérer avec le ou les pistons de cette machine pour le ou les ramener dans le ou les cylindres. Ainsi, l'orifice 12C de la machine est un orifice de crabotage/décrabotage qui sert, dans l'état de repos, à maintenir le ou les pistons dans un état décraboté dans lesquels il favorise la rotation du rotor de la machine en roue libre.

Pour opérer un embrayage de la machine hydraulique 12, c'est-à-dire craboter les pistons, le dispositif de valve 16 peut être commandé par l'unité de commande 20 pour faire baisser la pression au port de mise en pression HD, par exemple en reliant (par des conduits internes à ce dispositif) ce port HD au port hydraulique de retour HR. Cependant, il est également possible que la machine hydraulique présente un orifice 12D de retour de fuite reliant l'espace intérieur du carter au réservoir R, par exemple via une restriction ou un clapet commandé séparément. On relève que, le fluide ayant ainsi servi à provoquer ou faciliter le décrabotage des pistons a pu subir un réchauffement du fait de la rotation en roue libre du rotor de la machine hydraulique, de sorte qu'il est intéressant que le fluide évacué lorsque le décrabotage cesse passe par le refroidisseur 22 avant de retourner au réservoir.

Par ailleurs, les séquences de commande du dispositif de valve reliant le port hydraulique HD à la pression intermédiaire ou à la pression du port hydraulique de retour nécessaire à la réalisation du crabotage et du décrabotage du ou des pistons de la machine hydraulique peuvent être organisées comme évoqué dans l'art antérieur précité, en particulier pour éviter les à-coups lors du crabotage.

En particulier, la pression intermédiaire peut être comprise entre 5 et 10 bar.

On voit encore sur la figure 1 que le carter 11 présente un port HS de source de fluide, relié en l'espèce au réservoir R. Comme indiqué, ce réservoir est en particulier un réservoir sans surpression, c'est-à-dire sensiblement à la pression atmosphérique. Le dispositif de pompe peut fonctionner en circuit fermé, pour ce qui concerne au moins la partie "pompe principale" de ce dispositif. Peut également fonctionner en circuit ouvert en tout ou partie. En particulier, lorsque ce dispositif de pompe 14 comprend une pompe de gavage, le port HS de source de fluide peut servir à l'alimentation pour cette pompe de gavage. De manière générale, le port HS peut servir au remplissage en fluide hydraulique des composants hydrauliques du bloc d'alimentation, avant le démarrage de la machine hydraulique.

Dans l'exemple de la figure 1, le carter 11 est en deux parties 11A et 11B qui sont fixées ensemble. La partie 11A est une partie de pompe qui présente et contient le dispositif de pompe, tandis que la partie 11B est une partie de valve qui présente les ports hydrauliques de puissance. Dans l'exemple représenté, le dispositif de valve 16 est également contenu dans cette partie de valve 11B. Il convient cependant de relever qu'un ou plusieurs composants du dispositif de valve pourrai(ent) plutôt être disposé(s) dans la partie de carter 11A, c'est-à-dire du côté du dispositif de pompe. Cela peut en particulier être le cas lorsque ce dispositif de pompe comprend une partie pompe de gavage en sortie de laquelle peut être disposé un composant servant au pilotage d'autres composants du dispositif de valve, en particulier des composants disposés en série par rapport à ce composant servant au pilotage. Par ailleurs, dans cet exemple, l'interface 15 dont les dimensions peuvent être très réduites, est disposée dans les carters 11A et 11B. En l'occurrence, elle peut être disposée pour partie dans chacune de ces deux parties de carter, ou bien être intégralement disposée dans l'une d'entre elles.

On décrit maintenant la figure 2, sur laquelle les éléments communs avec la figure 1 sont désignés par les mêmes références numériques. En réalité, la variante représentée à la figure 2 est très proche de celle de la figure 1, elle s'en distingue par le fait que le carter 11' du bloc d'alimentation 10' est cette fois formé en trois parties, à savoir une partie 11'A qui est une partie de pompe qui présente et contient le dispositif de pompe 14, une partie de valve 11'C qui présente les ports hydrauliques de puissance et une partie 11'B d'interface entre le dispositif de pompe 14 et le dispositif de valve hydraulique 16, la partie d'interface étant fixée entre la partie de pompe 16'A et la partie de valve 11'C. En l'espèce, le dispositif de valve 16 est contenu dans la partie de valve 11'C du carter 11'. Cependant, comme évoqué précédemment à l'égard de la figure 1, un ou plusieurs composant(s) du dispositif de valve pourrai(ent) se trouver dans la partie de pompe 11'A du carter.

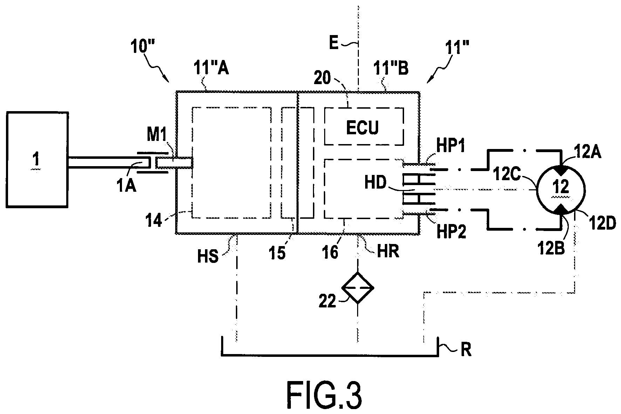

On décrit maintenant la figure 3 qui représente un bloc d'alimentation 10" qui se distingue de celui des autres figures en ce qu'il inclue en tout ou partie les moyens de commande 20 du dispositif de valve hydraulique. Ainsi, ces moyens de commande, qu'il s'agisse de moyens du type ECU ou du type relais électriques, sont logés en tout ou partie dans le carter 11" du bloc 10". En l'espèce, on a représenté les moyens de commande 20 logés dans la partie de valve 11"B du carter, sachant cependant qu'ils pourraient être logés dans une autre partie du carter. Le carter 11" présente au moins un port de commande E pour l'alimentation des moyens de commande 20 et/ou leur mise en communication avec une partie restante de commande. Les autres éléments de la figure 3 sont désignés par les mêmes références que sur les figures 1 et 2.

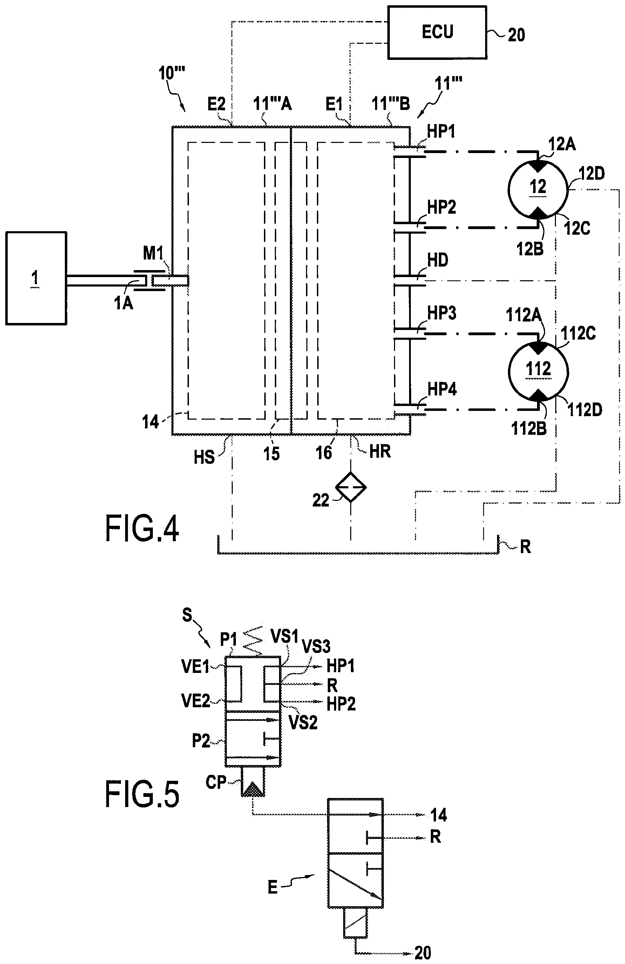

On décrit maintenant la figure 4. En l'espèce, cette figure représente un bloc d'alimentation 10'" du même type que le bloc 10 de la figure 1 en ce que son carter 11''' comporte seulement deux parties de carter, à savoir une partie de pompe 11'''A et une partie de valve 11"'B. Sur la figure 4, les éléments analogues à ceux des figures précédentes sont désignés par les mêmes références. En réalité, le circuit de transmission représenté sur la figure 4 se distingue de celui de la figure 1 en ce qu'il comprend non pas une machine hydraulique 12, mais deux machines hydrauliques, respectivement 12 et 112. Le carter 11''' du bloc d'alimentation 10''' de la figure 4 présente, en plus des premier et deuxième ports hydrauliques de puissance HP1 et HP2, un troisième et un quatrième ports hydrauliques de puissance HP3 et HP4. Ces troisième et quatrième ports hydrauliques de puissance sont respectivement reliés aux orifices principaux 112A et 112B de la deuxième machine hydraulique 112. Le dispositif de valve 16 du bloc d'alimentation 10'" de la figure 4 a des ports de sortie respectivement reliés à ces ports hydrauliques de puissance HP1 à HP4 et peut être commandé par l'unité de commande 20 pour, via l'interface 15, les relier sélectivement entre eux ou sélectivement au dispositif de pompe 14. En particulier, le dispositif de valve 16 du bloc d'alimentation 10''' peut être commandé par l'unité de commande 20 pour, dans l'état de repos, mettre des premier, deuxième, troisième et quatrième ports hydrauliques de puissance HP1, HP2, HP3 et HP4 à la pression commune de repos. Dans ce cas, les deux machines hydrauliques 12 et 112 sont désactivées. Le dispositif de valve 16 du bloc d'alimentation 10''' peut également être commandé par l'unité de commande 20 pour, dans l'état activé, respectivement relier les troisième et quatrième ports hydrauliques de puissance HP3 et HP4 à l'une ou l'autre de la haute et de la basse pression du dispositif de pompe. Ainsi, dans l'état activé, les deux machines 12 et 112 peuvent être actives.

Le dispositif de valve 16 peut gérer des différences entre les pressions et les débits aux ports hydrauliques de puissance des deux machines respectivement reliés à la haute pression ou à la basse pression, ce qui est en particulier le cas lorsque les machines 12 et 112 sont des moteurs hydrauliques attelés à des roues d'un véhicule, pour gérer les situations de patinage de l'une des roues ou des situations dans lesquelles l'une des roues doit tourner plus vite que l'autre, par exemple en virage.

Pour le reste, dans le bloc d'alimentation 10''' de la figure 4, le carter 11''' est analogue à celui des figures précédentes en ce qu'il présente l'entrée de mouvement M1, et les ports hydrauliques HR de retour au réservoir, HS de source de fluide, et HD de mise en pression. En l'espèce, le port HD est relié par une conduite commune aux orifices de carter 12C et 112C des machines hydrauliques 12 et 112, pour opérer simultanément un crabotage ou un décrabotage des pistons respectifs de ces machines. En revanche, en l'espèce, les orifices de retour de fuite 12D et 112D de ces deux machines sont reliés au réservoir par des conduites différentes. Le carter 11''' présente également les ports de commande E1 et E2 dans la mesure où l'unité de commande en est séparée. Les moyens de commande pourraient cependant être en tout ou partie intégrés à ce carter, comme sur la figure 3.

Il convient de relever que le bloc d'alimentation selon le présent exposé pourrait comporter davantage de ports hydrauliques de puissance selon le nombre de machines hydrauliques qu'il sert à alimenter. Cependant, il est également possible, avec le bloc d'alimentation 10, 10' ou 10" des figures 1, 2 ou 3, de gérer l'alimentation en fluide de plusieurs machines hydrauliques, en particulier en reliant leurs orifices principaux respectifs aux ports hydrauliques de puissance HP1 et HP2.

En particulier, le dispositif de valve hydraulique peut comprendre un sélecteur d'alimentation relié aux ports hydrauliques de puissance. Un exemple pour un tel sélecteur S est représenté sur la figure 5. Il s'agit en l'espèce d'un sélecteur hydraulique piloté hydrauliquement par une chambre de pilotage CP alimentée via une conduite pouvant être reliée au dispositif de pompe, en particulier à une pompe de gavage de ce dispositif, par l'interface 15. Ce sélecteur comprend des voies de sortie VS1 et VS2, respectivement reliées aux ports hydrauliques de puissance HP1 et HP2. Il convient de relever que, lorsque la transmission comprend deux machines du type des machines 12 et 112 représentées sur la figure 4 avec un bloc d'alimentation ayant quatre ports hydrauliques de puissance HP1 à HP4, la voie VS1 peut être reliée aux ports HP1 et HP3, et la voie VS2 peut être reliée aux ports HP2 et HP4, un composant hydraulique étant éventuellement interposé en aval entre les liaisons des ports hydrauliques de puissance HP1 et HP3 et des ports hydrauliques de puissance HP2 et HP4, pour gérer d'éventuelles différences de débit et de pression entre ces ports ainsi qu'indiqué précédemment. Le sélecteur d'alimentation S représenté à la figure 5 présente également deux voies d'entrée, VE1 et VE2 reliées, via l'interface 15, aux orifices principaux du dispositif de pompe 14. Ainsi, selon leurs liaisons, les voies d'entrée VE1 et VE2 peuvent être mises respectivement à la haute pression et à la basse pression ou inversement, lorsque le dispositif de pompe est entraîné par le moteur 1.

Le sélecteur S peut occuper une première position P1 dans laquelle les voies VS1 et VS2 sont reliées ensemble, en étant isolées des voies VE1 et VE2. Dans ce cas, la commande correspond à l'état de repos, puisque l'on comprend que les ports hydrauliques de puissance HP1 et HP2 sont mis à la même pression en étant isolés du dispositif de pompe. Par ailleurs, les voies VE1 et VE2 sont reliées ensemble, le dispositif de pompe pouvant être inactif ou à cylindrée nulle, soit par une commande de sa cylindrée, soit par le débrayage de son entraînement.

Le sélecteur S peut également être commandé dans une position P2 dans laquelle les voies VS1 et VS2 sont respectivement reliées aux voies VE1 et VE2, ce qui correspond à l'état activé évoqué précédemment. On remarque que le sélecteur présente en l'espèce une voie de sortie supplémentaire VS3 qui peut en particulier être reliée au réservoir R, éventuellement via une restriction calibrée, pour, dans l'état de repos, mettre la pression commune à une faible pression proche de celle du réservoir.

Comme indiqué, le sélecteur S est en l'espèce commandé hydrauliquement via une chambre de pilotage CP. L'alimentation de cette chambre de pilotage peut être gérée par la commande de l'unité de commande 20, via une électrovanne E commandée par l'unité de commande 20 pour, selon sa position, mettre cette chambre de commande CP en liaison avec un orifice de sortie du dispositif de pompe 14, ou bien avec le réservoir R.

En variante, on peut utiliser un sélecteur à commande pneumatique, analogue au sélecteur S qui vient d'être décrit, mais dont la chambre de pilotage soit commandée par de l'air, dont l'injection et l'échappement dans cette chambre soient eux-mêmes commandés électriquement, en particulier par une électrovanne.

De manière générale, on peut utiliser tout type de sélecteur d'alimentation pour le dispositif de valve hydraulique. En particulier, on peut utiliser un sélecteur électrique, par exemple du type ayant un élément mobile pouvant être déplacé en fonction de l'alimentation électrique qu'il reçoit, entre plusieurs positions dans lesquelles il établit les liaisons hydrauliques souhaitées.

## Revendications

1. Bloc d'alimentation (10 ; 10' ; 10"; 10''') pour au moins une machine hydraulique (12 ; 112), comprenant un carter (11 ; 11' ; 11"; 11''') contenant un dispositif de pompe (14) et présentant une entrée de mouvement (M1) pour l'entraînement mécanique du dispositif de pompe, et un premier et un deuxième port hydraulique de puissance (HP1, HP2), le carter contenant un dispositif de valve hydraulique (16) de liaison sélective entre le dispositif de pompe (14) et lesdits ports hydrauliques de puissance (HP1, HP2), le bloc étant configuré pour être relié à des moyens de commande (20) du dispositif de valve hydraulique (16) et pour adopter un état activé dans lequel les premier et deuxième ports hydrauliques de puissance (HP1, HP2) sont respectivement mis à une haute pression et à une basse pression du dispositif de pompe (14), **caractérisé en ce que** le dispositif de valve hydraulique (16) comprend un sélecteur d'alimentation (S) relié aux ports hydrauliques de puissance (HP1, HP2 ; HP3, HP4), et configuré pour, selon son état, relier les premier et deuxième ports hydrauliques de puissance entre eux de manière à permettre un état de repos (P1) dans lequel les premier et deuxième ports hydrauliques de puissance (HP1, HP2) sont mis à une pression commune de repos, ou relier sélectivement les premier et deuxième ports hydrauliques de puissance au dispositif de pompe de manière à permettre l'état activé (P2).

2. Bloc d'alimentation selon la revendication 1, dans lequel le carter (10''') présente en outre un troisième et un quatrième port hydraulique de puissance (HP3, HP4), les premier, deuxième, troisième et quatrième ports hydrauliques de puissance étant mis à la pression commune de repos dans l'état de repos, et les troisième et quatrième ports hydrauliques de puissance (HP3, HP4), étant respectivement mis à la haute et à la basse pression du dispositif de pompe (14) dans l'état activé.

3. Bloc d'alimentation selon la revendication 1 ou 2, dans lequel la haute pression et la basse pression du dispositif de pompe (14) sont respectivement comprises entre 80 et 600 bar, et entre 10 et 30 bar.

4. Bloc d'alimentation selon l'une quelconque des revendications 1 à 3, dans lequel le carter (11 ; 11' ; 11"; 11''') présente un port hydraulique (HR) de retour à un réservoir de fluide (R) et un port hydraulique de mise en pression (HD), et dans lequel, dans l'état de repos, le port hydraulique de mise en pression (HD) est mis à une pression intermédiaire du dispositif de pompe (14) supérieure à la pression au port hydraulique de retour (HR), tandis que, dans l'état activé, le port hydraulique de mise en pression (HD) est mis à la pression du port hydraulique de retour (HR).

5. Bloc d'alimentation selon la revendication 4, dans lequel la pression intermédiaire est comprise entre 5 et 10 bar.

6. Bloc d'alimentation selon l'une quelconque des revendications 1 à 5, dans lequel le carter (11 ; 11' ; 11''') présente au moins un port de commande (E1, E2), pour sa liaison aux moyens de commande (20).

7. Bloc d'alimentation selon la revendication 6, dans lequel ledit au moins un port de commande comprend un port de connexion électrique et/ou un port de connexion hydraulique ou pneumatique.

8. Bloc d'alimentation selon l'une quelconque des revendications 1 à 7, dans lequel le carter (11 ; 11' ; 11''') présente un port de commande de cylindrée (E2) de pompe.

9. Bloc d'alimentation selon l'une quelconque des revendications 1 à 8, dans lequel le carter (11 ; 11' ; 11"; 11''') présente un port de source de fluide (HS).

10. Bloc d'alimentation selon l'une quelconque des revendications 1 à 9, dans lequel le carter (11 ; 11"; 11''') comprend deux parties fixées ensemble, à savoir une partie de pompe (11A ; 11"A; 11'''A) qui présente et contient le dispositif de pompe (14), et une partie de valve (11B ; 11"B; 11'''B) qui présente les ports hydrauliques de puissance (HP1, HP2 ; HP3, HP4), une interface (15) entre le dispositif de pompe (14) et le dispositif de valve hydraulique (16) étant logée dans lesdites parties de pompe et de valve.

11. Bloc d'alimentation selon l'une quelconque des revendications 1 à 9, dans lequel le carter (11') comprend trois parties fixées ensemble, à savoir une partie de pompe (11'A) qui présente et contient le dispositif de pompe (14), une partie de valve (11'C) qui présente les ports hydrauliques de puissance (HP1, HP2 ; HP3, HP4), et une partie (11'B) d'interface entre le dispositif de pompe (14) et le dispositif de valve hydraulique (16), ladite partie d'interface étant fixée entre la partie de pompe (11'A) et la partie de valve (11'C).

12. Ensemble de commande d'alimentation pour au moins une machine hydraulique (12 ; 112), comprenant un bloc d'alimentation (10 ; 10' ; 10"; 10''') selon l'une quelconque des revendications 1 à 11 et des moyens de commande (20) reliés à ce bloc.

13. Circuit de transmission hydraulique, comprenant au moins une machine hydraulique (12 ; 112) et un bloc d'alimentation (10 ; 10' ; 10"; 10''') pour ladite machine, selon l'une quelconque des revendications 1 à 11, dans lequel la machine hydraulique (12 ; 112) présente deux orifices principaux (12A, 12B ; 112A, 112B) respectivement raccordés au premier et au deuxième port hydraulique de puissance (HP1, HP2 ; HP3, HP4) du bloc d'alimentation.

14. Circuit de transmission selon la revendication 13, comprenant au moins une autre machine hydraulique (12 ; 112), dans lequel le bloc d'alimentation est selon la revendication 2, et ladite autre machine hydraulique (112) présente deux orifices principaux respectivement raccordés au troisième et au quatrième port hydraulique de puissance (HP3, HP4) du bloc d'alimentation (10''').

15. Circuit de transmission selon la revendication 13 ou 14, dans lequel la ou les machines hydrauliques (12 ; 112) sont des moteurs hydrauliques débrayables d'assistance hydraulique temporaire.

16. Circuit de transmission selon la revendication 15, dans lequel le bloc d'alimentation (10 ; 10' ; 10"; 10''') est selon la revendication 4, prise en combinaison avec l'une quelconque des revendications 1 à 11, et dans lequel le ou les moteurs hydrauliques (12 ; 112) présentent un orifice de crabotage/décrabotage (12C ; 112C) raccordé au port hydraulique de mise en pression (HD) du bloc d'alimentation, le circuit comprenant un réservoir de fluide auquel est raccordé le port hydraulique de retour (HR) du bloc d'alimentation.

17. Circuit de transmission selon la revendication 16, dans lequel le port hydraulique de retour (HR) du bloc d'alimentation est raccordé au réservoir (R) de fluide via un refroidisseur (22).

## Patentansprüche

1. Versorgungseinheit (10; 10'; 10"; 10''') für wenigstens eine hydraulische Maschine (12; 112), umfassend ein Gehäuse (11; 11'; 11"; 11'''), das eine Pumpenvorrichtung (14) enthält und einen Bewegungseingang (M1) für den mechanischen Antrieb der Pumpenvorrichtung sowie einen ersten und einen zweiten hydraulischen Leistungsanschluss (HP1, HP2) aufweist, wobei das Gehäuse eine Hydraulikventilvorrichtung (16) zum selektiven Verbinden zwischen der Pumpenvorrichtung (14) und den hydraulischen Leistungsanschlüssen (HP1, HP2) enthält, wobei die Einheit dazu ausgelegt ist, mit Steuermitteln (20) der Hydraulikventilvorrichtung (16) verbunden zu werden und einen aktivierten Zustand einzunehmen, in dem der erste und der zweite hydraulische Leistungsanschluss (HP1, HP2) jeweils mit einem Hochdruck und einem Niederdruck der Pumpenvorrichtung (14) beaufschlagt sind, **dadurch gekennzeichnet, dass** die Hydraulikventilvorrichtung (16) einen Versorgungswähler (S) enthält, der mit den hydraulischen Leistungsanschlüssen (HP1; HP2; HP3, HP4) verbunden und dazu ausgelegt ist, entsprechend seinem Zustand den ersten und den zweiten hydraulischen Leistungsanschluss untereinander zu verbinden, um einen Ruhezustand (P1) zu ermöglichen, in dem der erste und der zweite hydraulische Leistungsanschluss (HP1, HP2) mit einem gemeinsamen Ruhedruck beaufschlagt sind, oder den ersten und den zweiten hydraulischen Leistungsanschluss selektiv mit der Pumpenvorrichtung zu verbinden, um den aktivierten Zustand (P2) zu ermöglichen.

2. Versorgungseinheit nach Anspruch 1, bei dem das Gehäuse (10''') ferner einen dritten und einen vierten hydraulischen Leistungsanschluss (HP3, HP4) aufweist, wobei der erste, zweite, dritte und vierte hydraulische Leistungsanschluss in dem Ruhezustand mit dem gemeinsamen Ruhedruck beaufschlagt sind, und wobei der dritte und der vierte hydraulische Leistungsanschluss (HP3, HP4) in dem aktivierten Zustand mit dem Hochdruck bzw. mit dem Niederdruck der Pumpenvorrichtung (14) beaufschlagt sind.

3. Versorgungseinheit nach Anspruch 1 oder 2, bei der der Hochdruck und der Niederdruck der Pumpenvorrichtung (14) im Bereich zwischen 80 und 600 bar bzw. im Bereich zwischen 10 und 30 bar liegen.

4. Versorgungseinheit nach einem der Ansprüche 1 bis 3, bei der das Gehäuse (11; 11'; 11"; 11''') einen Hydraulikanschluss (HR) zum Zurückführen zu einem Fluidbehälter (R) und einen hydraulischen Druckbeaufschlagungsanschluss (HD) aufweist, und wobei der hydraulische Druckbeaufschlagungsanschluss (HD) im Ruhezustand mit einem Zwischendruck der Pumpenvorrichtung (14) beaufschlagt ist, der größer ist als der Druck an dem hydraulischen Rücklaufanschluss (HR), während der hydraulische Druckbeaufschlagungsanschluss (HD) im aktivierten Zustand mit dem Druck des hydraulischen Rücklaufanschlusses (HR) beaufschlagt ist.

5. Versorgungseinheit nach Anspruch 4, bei der der Zwischendruck im Bereich zwischen 5 und 10 bar liegt.

6. Versorgungseinheit nach einem der Ansprüche 1 bis 5, bei der das Gehäuse (11; 11'; 11''') wenigstens einen Steueranschluss (E1, E2) für sein Verbinden mit den Steuermitteln (20) aufweist.

7. Versorgungseinheit nach Anspruch 6, bei der der wenigstens eine Steueranschluss einen elektrischen Verbindungsanschluss und/oder einen hydraulischen oder pneumatischen Verbindungsanschluss umfasst.

8. Versorgungseinheit nach einem der Ansprüche 1 bis 7, bei der das Gehäuse (11; 11'; 11''') einen Anschluss zum Steuern des Arbeitsvolumens (E2) der Pumpe aufweist.

9. Versorgungseinheit nach einem der Ansprüche 1 bis 8, bei der das Gehäuse (11; 11'; 11"; 11"") einen Fluidquellenanschluss (HS) aufweist.

10. Versorgungseinheit nach einem der Ansprüche 1 bis 9, bei der das Gehäuse (11; 11"; 11"") zwei Teile aufweist, die aneinander befestigt sind, nämlich einen Pumpenteil (11A; 11"A; 11'''A), welcher die Pumpenvorrichtung (14) aufweist und enthält, sowie einen Ventilteil (11B; 11"B; 11'''B), welcher die hydraulischen Leistungsanschlüsse (HP1, HP2; HP3, HP4) aufweist, wobei eine Schnittstelle (15) zwischen der Pumpenvorrichtung (14) und der Hydraulikventilvorrichtung (16) in den Pumpen- und Ventilteilen aufgenommen ist.

11. Versorgungseinheit nach einem der Ansprüche 1 bis 9, bei der das Gehäuse (11') drei Teile umfasst, die aneinander befestigt sind, nämlich einen Pumpenteil (11'A), welcher die Pumpenvorrichtung (14) aufweist und enthält, einen Ventilteil (11'C), welcher die hydraulischen Leistungsanschlüsse (HP1, HP2; HP3, HP4) aufweist, und einen Schnittstellenteil (11'B) zwischen der Pumpenvorrichtung (14) und der Hydraulikventilvorrichtung (16), wobei der Schnittstellenteil zwischen dem Pumpenteil (11'A) und dem Ventilteil (11'C) befestigt ist.

12. Versorgungssteueranordnung für wenigstens eine hydraulische Maschine (12; 112), umfassend eine Versorgungseinheit (10; 10'; 10"; 10''') nach einem der Ansprüche 1 bis 11 sowie Steuermittel (20), die mit dieser Einheit verbunden sind.

13. Hydraulischer Übertragungskreis, umfassend wenigstens eine hydraulische Maschine (12; 112) und eine Versorgungseinheit (10; 10'; 10"; 10''') für die Maschine nach einem der Ansprüche 1 bis 11, bei dem die hydraulische Maschine (12; 112) zwei Hauptöffnungen (12A, 12B; 112A, 112B) aufweist, die mit dem ersten bzw. mit dem zweiten hydraulischen Leistungsanschluss (HP1, HP2; HP3, HP4) der Versorgungseinheit verbunden sind.

14. Übertragungskreis nach Anspruch 13, umfassend wenigstens eine weitere hydraulische Maschine (12; 112), wobei die Versorgungseinheit gemäß Anspruch 2 ist und die weitere hydraulische Maschine (112) zwei Hauptöffnungen aufweist, die mit dem dritten bzw. mit dem vierten hydraulischen Leistungsanschluss (HP3, HP4) der Versorgungseinheit (10''') verbunden sind.

15. Übertragungskreis nach Anspruch 13 oder 14, bei der die hydraulische Maschine oder Maschinen (12; 112) ausrückbare Hydraulikmotoren zur vorübergehenden hydraulischen Unterstützung sind.

16. Übertragungskreis nach Anspruch 15, bei dem die Versorgungseinheit (10; 10'; 10"; 10"") gemäß Anspruch 4 ist, in Kombination mit einem der Ansprüche 1 bis 11, und bei dem der oder die Hydraulikmotor(en) (12; 112) eine Einrück-/Ausrücköffnung (12C; 112C) aufweisen, welche mit dem hydraulischen Druckbeaufschlagungsanschluss (HD) der Versorgungseinheit verbunden ist, wobei der Kreis einen Fluidbehälter umfasst, mit dem der hydraulische Rücklaufanschluss (HR) der Versorgungseinheit verbunden ist.

17. Übertragungskreis nach Anspruch 16, bei dem der hydraulische Rücklaufanschluss (HR) der Versorgungseinheit über einen Kühler (22) mit dem Fluidbehälter (R) verbunden ist.

## Claims

1. A power supply (10; 10'; 10"; 10''') for at least one hydraulic machine (12; 112), comprising a casing (11; 11'; 11"; 11''') containing a pump device (14) and having a movement input (M1) for the mechanical drive of the pump device, and a first and a second hydraulic power port (HP1, HP2), the casing containing a hydraulic valve device (16) for selectively linking the pump device (14) and said hydraulic power ports (HP1, HP2), the block being configured to be linked to means for controlling (20) the hydraulic valve device (16) and to adopt an activated state in which the first and second hydraulic power ports (HP1, HP2) are respectively set to a high pressure and to a low pressure of the pump device (14), **characterized in that** the hydraulic valve device (16) comprises a power selector (S) linked to the hydraulic power ports (HP1, HP2; HP3, HP4), and configured to link, depending on its state, the first and second hydraulic power ports to each other so as to allow a rest state (P1) in which the first and second hydraulic power ports (HP1, HP2) are set to a common rest pressure, or selectively link the first and second hydraulic power ports to the pump device so as to allow the activated state (P2).

2. The power supply according to claim 1, wherein the casing (10''') further has a third and a fourth hydraulic power port (HP3, HP4), the first, second, third and fourth hydraulic power ports being set to the common rest pressure in the rest state, and the third and fourth hydraulic power ports (HP3, HP4), being respectively set to the high and to the low pressure of the pump device (14) in the activated state.

3. The power supply according to claim 1 or 2, wherein the high pressure and the low pressure of the pump device (14) are respectively comprised between 80 and 600 bars, and between 10 and 30 bars.

4. The power supply according to any one of claims 1 to 3, wherein the casing (11; 11'; 11"; 11''') has a hydraulic port (HR) returning to a fluid reservoir (R) and a hydraulic pressurization port (HD), and wherein, in the rest state, the hydraulic pressurization port (HD) is set to an intermediate pressure of the pump device (14) greater than the pressure of the hydraulic return port (HR), while in the activated state, the hydraulic pressurization port (HD) is set to the pressure of the hydraulic return port (HR).

5. The power supply according to claim 4, wherein the intermediate pressure is comprised between 5 and 10 bars.

6. The power supply according to any one of claims 1 to 5, wherein the casing (11; 11'; 11''') has at least one control port (E1, E2) for its linking to the control means (20).

7. The power supply according to claim 6, wherein said at least one control port comprises an electrical connection port and/or a hydraulic or pneumatic connection port.

8. The power supply according to any one of claims 1 to 7, wherein the casing (11; 11'; 11''') has a pump displacement control port (E2).

9. The power supply according to any one of claims 1 to 8, wherein the casing (11; 11'; 11"; 11''') has a fluid source port (HS).

10. The power supply according to any one of claims 1 to 9, wherein the casing (11; 11"; 11''') comprises two parts fixed together, namely a pump part (11A; 11"A; 11"'A) which presents and contains the pump device (14), and a valve part (11B; 11"B; 11'''B) which presents the hydraulic power ports (HP1, HP2; HP3, HP4), an interface (15) between the pump device (14) and the hydraulic valve device (16) being housed in said pump and valve parts.

11. The power supply according to any one of claims 1 to 9, wherein the casing (11') comprises three parts fixed together, namely a pump part (11'A) which presents and contains the pump device (14), a valve part (11'C) which presents the hydraulic power ports (HP1, HP2; HP3, HP4), and an interface part (11'B) between the pump device (14) and the hydraulic valve device (16), said interface part being fixed between the pump part (11'A) and the valve part (11'C).

12. A power control assembly for at least one hydraulic machine (12; 112), comprising a power supply (10; 10'; 10"; 10''') according to any one of claims 1 to 11 and control means (20) linked to this block.

13. A hydraulic transmission circuit, comprising at least one hydraulic machine (12; 112) and a power supply (10; 10'; 10"; 10''') for said machine, according to any one of claims 1 to 11, wherein the hydraulic machine (12; 112) has two main orifices (12A, 12B; 112A, 112B) respectively linked to the first and second hydraulic power ports (HP1, HP2; HP3, HP4) of the power supply.

14. The transmission circuit according to claim 13, comprising at least one other hydraulic machine (12; 112), wherein the power supply is according to claim 2, and said other hydraulic machine (112) has two main orifices respectively linked to the third and fourth hydraulic power port (HP3, HP4) of the power supply (10''').

15. The transmission circuit according to claim 13 or 14, wherein the hydraulic machine(s) (12; 112) is/are disengageable hydraulic motors for temporary hydraulic assistance.

16. The transmission circuit according to claim 15, wherein the power supply (10; 10'; 10"; 10''') is according to claim 4, taken in combination with any one of claims 1 to 11, and wherein the hydraulic motor(s) (12; 112) have a clutching/declutching orifice (12C; 112C) linked to the hydraulic pressurization port (HD) of the power supply, the circuit comprising a fluid reservoir to which the hydraulic return port (HR) of the power supply is linked.

17. The transmission circuit according to claim 16, wherein the hydraulic return port (HR) of the power supply is linked to the fluid reservoir (R) via a cooler (22).
